**Europäisches Patentamt**

(19) **European Patent Office**

**Office européen des brevets**

(11) Veröffentlichungsnummer: **0 013 393**
**B1**

(12) # EUROPÄISCHE PATENTSCHRIFT

(45) Veröffentlichungstag der Patentschrift:
**23.11.83**

(51) Int. Cl.³: **F 16 L 37/22**, F 16 L 37/28

(21) Anmeldenummer: **79105270.7**

(22) Anmeldetag: **19.12.79**

(54) **Rohrleitungskupplung.**

(30) Priorität: **20.12.78 CH 12963/78**

(73) Patentinhaber: **Abnox AG, CH-6330 Cham (CH)**

(43) Veröffentlichungstag der Anmeldung:
**23.07.80 Patentblatt 80/15**

(72) Erfinder: **Bläuenstein, Arnold, Scheuermattstrasse 4,
CH-6330 Cham (CH)**

(45) Bekanntmachung des Hinweises auf die Patenterteilung:
**23.11.83 Patentblatt 83/47**

(74) Vertreter: **Quehl, Horst Max, Dipl.-Ing., c/o EGLI
PATENTANWAELTE Horneggstrasse 4, CH-8008 Zürich
(CH)**

(84) Benannte Vertragsstaaten:
**AT BE DE FR GB IT LU NL SE**

(56) Entgegenhaltungen:
**CH - A - 323 097
DE - A - 2 226 793
DE - A - 2 705 319
DE - A - 2 741 512
DE - B - 1 943 552
FR - A - 1 221 995
FR - A - 1 239 825
FR - A - 2 171 616
US - A - 2 473 973
US - A - 4 060 219**

Rohrleitungskupplung

Die Erfindung betrifft eine Rohrleitungskupplung gemäss dem Oberbegriff des Anspruchs 1.

Eine derartige Rohrleitungskupplung ist aus der US-A-4060219 bekannt. Diese Rohrleitungskupplung hat gegenüber anderen bekannten Rohrleitungskupplungen mit zwei axialen Kupplungspositionen des Stecknippels in dem Muffenteil, z.B. entsprechend der FR-A-1221995, den Vorteil, dass der Stecknippel mit einer Hand in dem Muffenteil eingekuppelt werden kann, ohne dass die Schiebehülse zum vollständigen Entkuppeln und damit Öffnen des Ventils von Hand verschoben werden muss. Ein Verschieben der Schiebehülse beim Einkuppeln des Stecknippels tritt jedoch auch bei der Rohrleitungskupplung entsprechend der US-A-4060219 auf, indem ihr erstes Riegelorgan beim Verdrängen durch einen Wulst des Stecknippels gegen eine konische Fläche der Schiebehülse gedrückt wird. Eine gleichgerichtete Schiebebewegung ist auch erforderlich, um den Stecknippel wieder aus dem Muffenteil zu lösen. Die vollständige Freigabe des Stecknippels über eine axiale Zwischenposition erfordert eine anschliessende Rückbewegung der Schiebehülse in ihre Ausgangsposition. Da jedoch diese Rückbewegung allein durch den Druck einer an der Schiebehülse wirkenden Feder erfolgen kann, besteht die Gefahr, dass eine Hin- und Herbewegung der Schiebehülse und damit eine vollständige Entkupplung bereits durch zufälliges Anstossen an die Schiebehülse auftritt.

Diese Nachteile werden erfindungsgemäss aufgrund der kennzeichnenden Merkmale des Anspruchs 1 vermieden.

Das federnde oder federbelastete Rastorgan hält die Hülse in ihrer genannten Verschiebeposition entgegen der Kraft der auf sie und das erste Riegelorgan wirkenden Feder, und nur durch Betätigen der Schiebehülse von Hand bzw. durch ihr absichtliches Betätigen kann die Haltekraft des Rastorgans überwunden werden. Durch das zweite kennzeichnende Merkmal des Anspruchs 1 kann das erste Riegelorgan beim Einstecken des Stecknippels in den Muffenteil entgegen der Federkraft ausweichen, ohne dass sich die Schiebehülse verschiebt und dabei unnötigerweise durch das Rastorgan festgehalten wird.

Vorteilhaft besteht das mindestens eine erste Riegelorgan aus dem Zylinderstift, dessen Enden an der das Riegelorgan belastenden Feder anliegen, so dass der Zylinderstift relativ zu der Schiebehülse in Richtung der Federbewegung beweglich ist, wie es an sich aus der CH-A-323097 bekannt ist. Es versteht sich, dass das Riegelorgan nicht unmittelbar an der Feder anliegen muss und zwischen beiden eine Druckscheibe vorgesehen sein kann. Der Zylinderstift kann als erstes Riegelorgan einen wesentlich kleineren Durchmesser haben als die entsprechend der US-A-4060219 verwendete Kugel, so dass eine geringere radiale Abmessung sowohl des Kupplungskörpers als auch der zweiten Riegelorgane möglich ist.

Da die Enden des Zylinderstiftes des mindestens einen ersten Riegelorgans die Anordnung von zweiten gleichartigen Riegelorganen ohne wesentlichen axialen Abstand verhindern würden, ist das mindestens eine zweite Riegelorgan in Form einer Kugel vorhanden, die in Umfangsrichtung des Kupplungskörpers neben einem ersten Riegelorgan angeordnet ist und sich in einem axial gerichteten länglichen Käfigraum befindet. Die Längsabmessung des länglichen Käfigraumes bestimmt dabei die axialen Kupplungspositionen des Stecknippels in dem Muffenteil bei einer vorgegebenen Abmessung der Umfangsnut des Stecknippels in axialer Richtung, bzw. kann bei vorgegebenen Kupplungspositionen die Umfangsnut des Stecknippels in axialer Richtung kürzer ausgeführt sein, als aufgrund einer Konstruktion entsprechend der FR-A-1221995 möglich wäre. Der längliche Käfigraum ermöglicht auch eine schräg nach aussen gerichtete Ausweichbewegung des zweiten Riegelorgans, ähnlich wie beim ersten Riegelorgan beim Einschieben des Stecknippels. Weitere vorteilhafte Ausgestaltungen der Erfindung sind in abhängigen Patentansprüchen angegeben und in der folgenden Beschreibung von in den Zeichnungen dargestellten Ausführungsbeispielen näher erläutert. Es zeigt:

Fig. 1 einen im Winkel von 90° geführten axialen Längsschnitt durch eine Rohrleitungskupplung entlang der Linie II–II der Fig. 2 im Zustand vor der Einführung des Stecknippels,

Fig. 2 eine Ansicht des Muffenteils der Kupplung von der Einführungsseite des Stecknippels aus,

Fig. 3 die Rohrleitungskupplung nach Fig. 1 im eingekuppelten Zustand, teils im axialen Längsschnitt und teils in Seitenansicht,

Fig. 4 einen im Winkel von 90° geführten axialen Längsschnitt durch die Rohrleitungskupplung im teilweise entkuppelten Zustand, und

Fig. 5 einen im Winkel von 90° geführten axialen Längsschnitt durch eine Rohrleitungskupplung entsprechend einem zweiten Ausführungsbeispiel.

Die Rohrleitungskupplung dient der Kupplung von zwei nicht dargestellten Rohrteilen, von denen eines z.B. fest installiert mit dem Muffenteil 2 versehen ist, während der andere, üblicherweise als Schlauch ausgeführte Rohrleitungsteil an seinem Ende den Stecknippel 4 aufweist. Dieser nur zum Teil dargestellte Stecknippel 4 hat somit an seinem nicht dargestellten Ende einen das Schlauchende aufnehmenden Teil, der z.B. als Gewindestutzen ausgeführt ist. Der Stecknippel entspricht in seiner Ausführung den Stecknippeln von bekannten Rohrkupplungen, so dass es möglich ist, mit bisher üblichen Stecknippeln versehene Schläuche mit dem den Muffenteil 2 aufweisenden Rohrteil zu kuppeln. Dieser Stecknippel hat somit an seinem vorderen Ende einen zylindrischen Zapfenteil 6, an den sich nach hinten über eine konische Fläche 8 ein Wulstteil 10 anschliesst, der in eine Umfangsnut 12 übergeht. An einen zweiten, im Durchmesser grösseren zylindrischen Teil 14 schliesst sich dann ein Sechskantkopf 16 an. Für die Führung des durch die Rohrleitung fliessenden Mediums erstreckt sich durch den Stecknippel eine in der Zeichnung nicht sichtbare Axialbohrung.

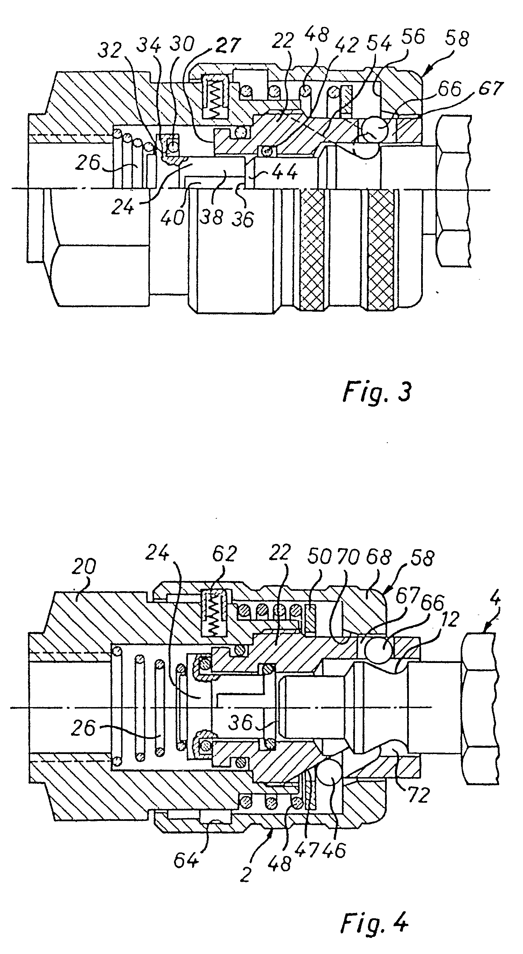

Der Muffenteil hat einen mit einem inneren Anschlussgewinde 18 versehenen hohlzylindrischen Muffenkörper 20, in dessen dem Anschlussgewinde 18 gegenüberliegenden Ende ein hohlzylindrischer Kupplungskörper 22 eingeschraubt ist. Ein O-Ring bewirkt eine Abdichtung zwischen beiden Körpern 20, 22. Zwischen dem Muffenkörper 20 und dem Kupplungskörper 22 ist ein Ventilschliesskörper 24 mit einer Schliessfeder 26 eingeschlossen, wobei für die Federauslenkung bzw. die Hubbewegung des Ventilschliesskörpers 24 zwischen dem eine Dichtfläche 27 aufweisenden Ende des Kupplungskörpers 22 und dem Muffenkörper 20 ein entsprechender zylindrischer Raum 28 vorgesehen ist. Ein Vergleich mit der Darstellung in Fig. 3 zeigt die zweite Extremposition des Schliesskörpers 24. Die Abdichtung erfolgt über einen O-Ring 30, der in einer Ringnut 32 eingeschlossen ist, die sich in einem Bundteil 34 des Ventilkörpers befindet. An diesem Bundteil liegt ausserdem die Schliessfeder 26 an. Durch den Druck der Feder 26 und den Druck des abzusperrenden Mediums liegt der O-Ring 30 des Schliesskörpers an der radialen Dichtfläche 27 des Kupplungskörpers 22 an.

Wird der Stecknippel 4 in den Muffenteil 2 eingeschoben, so drückt dieser mit seiner Stirnfläche 36 gegen die Stirnfläche eines Fortsatzes 38 des Schliesskörpers 24 und bewegt den Schliesskörper entgegen dem Druck der Schliessfeder 26 in die in Fig. 3 dargestellte Position, in der das Ventil voll geöffnet ist. Das Medium kann dann zwischen den Windungen der Feder 26 hindurch um den Bund 34 des Schliesskörpers herum und durch Schlitze 40 in dem Fortsatz 38 des Schliesskörpers zu der Eintrittsöffnung in der Stirnfläche 36 des Stecknippels 4 strömen.

Für die Abdichtung zwischen dem Kupplungskörper 22 und dem Stecknippel 4 befindet sich in einer umlaufenden Innennut des Kupplungskörpers 22 ein weiterer O-Ring 42, der im gekuppelten Zustand der Rohrleitungskupplung an der zylindrischen Fläche des Zapfenteiles 6 des Stecknippels anliegt. Das Einführen dieses Zapfenteiles 6 in O-Ring 42 wird durch eine Abschrägung 44 am vorderen Nippelende erleichtert.

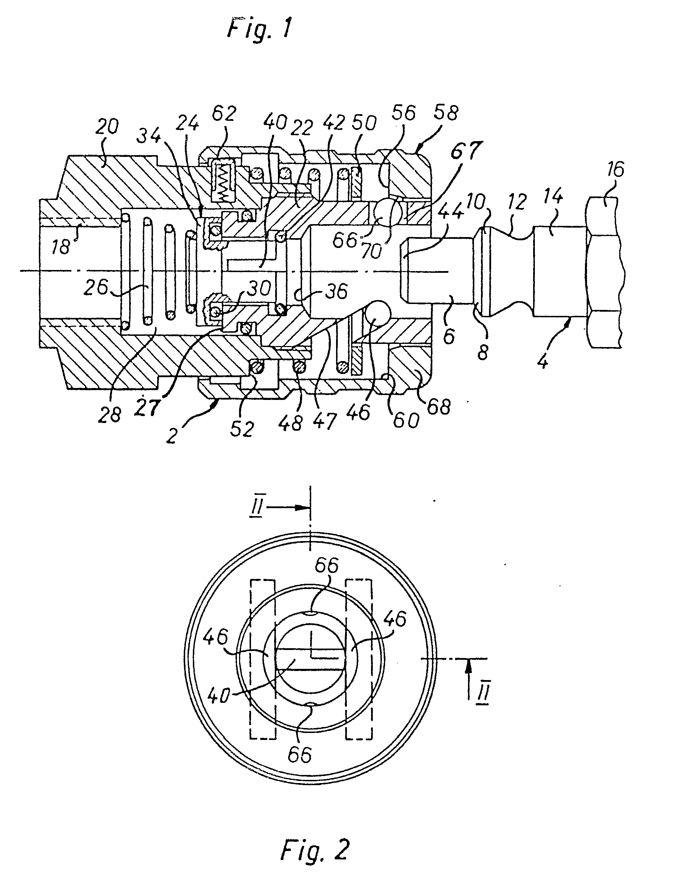

Für die Verriegelung des Stecknippels 4 im Muffenteil 2 dienen zwei Zylinderstifte 46, die in die Umfangsnut 12 des Stecknippels eingreifen. Wie den Darstellungen der Fig. 1 und 2 zu entnehmen ist, sind die Zylinderstifte 46 parallel zueinander und diametral einander gegenüberliegend in schräg geführten Schlitzen 47 des Kupplungskörpers 22 verschiebbar. Die Bewegung der Zylinderstifte 46 erfolgt gegen den Druck einer Schraubenfeder 48, die sich einerseits an einer axial zum Muffenteil verschiebbaren Ringscheibe 50 und andererseits an einem Absatz 52 des Muffenkörpers 20 unter Vorspannung abstützt. Somit wird der Druck der Feder über die Ringscheibe 50 auf die Zylinderstifte 46 übertragen. Die Form der Umfangsnut 12 des Stecknippels ist der Neigung der schrägen Führungsschlitze 47 angepasst, so dass die Zylinderstifte 46 in den ausgerundeten Grund der Nut unter dem Druck der Feder hineingelangen können. In Fig. 3 ist die sich somit ergebende Führungsbahn der Zylinderstifte durch Strichlinien 54 angedeutet, wobei zu berücksichtigen ist, dass die entsprechende Führungsnut 47 tatsächlich gegenüber der Darstellung um einen Winkel von 90° in Umfangsrichtung versetzt angeordnet ist. Beim Einschieben des Stecknippels gleiten die Zylinderstifte mit dem in Fig. 2 sichtbaren Teil über die konische Fläche 8 und den Wulst 10 des Stecknippels in die Nut 12, wobei die Feder 48 etwas zusammengedrückt wird. Auf der der Anlagestelle mit der Ringscheibe 50 gegenüberliegenden Seite der Zylinderstifte 46 liegt eine radial verlaufende Innenfläche 56 einer Schiebehülse 58 an, die den hohlzylindrischen Kupplungskörper 22 und einen Teil des Muffenkörpers 20 umschliesst. Durch Verschieben der Schiebehülse in Richtung zu dem Muffenkörper 20, d.h. in den Darstellungen nach links, lassen sich folglich die Zylinderstifte aus der Nut 12 des Stecknippels entlang den Schrägschlitzen 47 herausschieben, wenn diese Verriegelung gelöst werden soll. Eine Bewegung der Zylinderstifte 46 in ihrer Längsrichtung wird durch die zylindrische Innenfläche 60 der Schiebehülse 58 verhindert.

Fig. 4 zeigt die Position des Stecknippels relativ zu dem Kupplungskörper 22, nachdem auf die erwähnte Weise die Verriegelung des Stecknippels mit den Zylinderstiften 46 durch Verschieben der Hülse 58 nach links gelöst wurde. Durch Einrasten eines federnden Rastorganes 62 in eine flache umlaufende Innennut 64 der Schiebehülse 58 wird die Schiebehülse in ihrer Grenzposition arretiert. Durch die Schiebebewegung der Schiebehülse 58 nach links wurden zwei beispielsweise als Kugeln ausgeführte Sperrorgane 66 in ihrem Käfigraum 67 innerhalb eines Hülsenteiles 70 des Kupplungskörpers 22 radial nach innen bewegt, so dass sie zum Teil in den zylindrischen Aufnahmeraum 72 des Kupplungskörpers 22 hineinragen und folglich eine weitere Bewegung des Stecknippels 4 nach aussen durch Eingriff in dessen Umfangsnut 12 verhindern. Ein Herausfallen der kugelförmigen Sperrorgane 66 nach innen in den Aufnahmeraum 72, wenn kein Stecknippel 4 in den Muffenteil 2 eingeschoben ist, wird dadurch verhindert, dass die axial verlaufenden Seitenwände des Käfigraumes 67 radial nach innen gegeneinander laufen und an den Innenkanten dieses Käfigraumes 67 einen Abstand voneinander haben, der kleiner ist als der Durchmesser der kugelförmigen Sperrorgane 66.

Für die Steuerung der radialen Einwärtsbewegung der Sperrorgane 66 ist an der Innenseite des Bodenteiles 68 der Schiebehülse 58 eine leicht konische Steuerfläche 70 vorgesehen, die sich bei der Schiebebewegung der Schiebehülse über die kugelförmigen Sperrorgane 66 hinweg bewegt und diese dabei nach innen drückt. Die sich an die konische Fläche 70 anschliessende zylindrische Fläche hält dann entsprechend der Darstellung in Fig. 4 die Sperrorgane 66 in ihrer radial inneren Lage. Wie der Darstellung der Fig. 2 zu entnehmen ist, sind die in Eingriff mit der Umfangsnut 12 des Stecknippels 4 gelangenden Teile der Zylinderstifte 46 und die Sperrorgane 66 im Winkel von 90° versetzt zueinander angeordnet, und ihre axiale Lage zueinander ist durch die Strichliniendarstellung eines Zylinderstiftes 46 in Fig. 3 angedeutet. Auch ein Vergleich zwischen den Darstellungen der Fig. 3 und 4 zeigt, dass die durch die Zylinderstifte 46 und die Sperrorgane 66 gegebenen zwei Verriegelungspositionen des Stecknippels 4 im Muffenteil in verhältnismässig geringem axialem Abstand aufeinanderfolgen, so dass der Stecknippel 4 und insbesondere seine Umfangsnut 12 in axialer Richtung besonders kurz ausgeführt sein können, wie bei bisher üblichen Rohrleitungskupplungen ohne zweistufige Entkupplung.

Nachdem die Verriegelung des Stecknippels mit den Zylinderstiften auf die erwähnte Weise gelöst wurde, konnte sich somit der Stecknippel 4 unter dem Druck der Schliessfeder 26 und dem Druck des in der Rohrleitung geführten Mediums um ein Stück aus dem Muffenteil bis in die in Fig. 4 dargestellte Position herausbewegen und gelangte dann in eine zweite Verriegelungsposition mit den Sperrorganen 66. In dieser Position kann sich der Druck in dem sich an den Stecknippel 4 anschliessenden Schlauch entspannen, da ein Ausströmen entlang des Raumes zwischen der Innenwand des Kupplungskörpers 22 und dem Stecknippel 4 möglich ist.

Um die Kupplung vollständig lösen zu können bzw. den Stecknippel 4 vollständig aus dem Muffenteil 2 herauszuziehen, ist es erforderlich, die Schiebehülse 58 wieder von dem Muffenkörper 20 weg, d.h. in den zeichnerischen Darstellungen nach rechts, in die in Fig. 1 dargestellte Position zu bewegen. In dieser Position werden die kugelförmigen Sperrorgane 66 nicht mehr durch die radial innere Fläche des Bodenteiles 68 der Schiebehülse blockiert und können durch die konische Fläche der Umfangsnut 12 des Stecknippels radial nach aussen in eine Freigabeposition geschoben werden. Die Bewegung der Schiebehülse 58 nach rechts kann nicht selbsttätig durch den Druck der über die Ringscheibe 50 und die Zylinderstifte 46 auf den Bodenteil 68 der Schiebehülse wirkenden Schraubenfeder 48 erfolgen, da hierfür eine von Hand aufzubringende grössere Kraft erforderlich ist, die die Sperrwirkung des federnden Rastorganes 62 überwindet. Auf diese Weise wird sichergestellt, dass sich die Rohrleitungskupplung nicht unbeabsichtigt öffnen kann, selbst wenn durch einen Stoss gegen die Schiebehülse 58 die erste Verriegelung mit den Zylinderstiften 46 gelöst wurde.

Es versteht sich, dass die beschriebene Wirkungsweise auch bei zahlreichen Abwandlungen der konstruktiven Gestaltung erzielbar ist. Z.B. können die federbelasteten Zylinderstifte, die kugelförmigen Sperrorgane 66 oder das federnde Rastorgan 62 durch anders geformte, jedoch äquivalent wirkende Mittel, wie z.B. Klinken und ähnliche Mittel ersetzt werden. Auch die als Schraubenfedern ausgeführten Federorgane können durch andere Mittel mit Federwirkung, wie z.B. Gummiteile, Blattfedern und dgl. ersetzt werden. Wesentlich ist jedoch insbesondere die erzielte Anordnung der verschiedenen Sperrorgane 46, 66 nahe beieinander, so dass sich trotz einer kompakten und einfachen Konstruktion eine zuverlässige Wirkung bei Verwendung eines Stecknippels üblicher Ausführung ergibt.

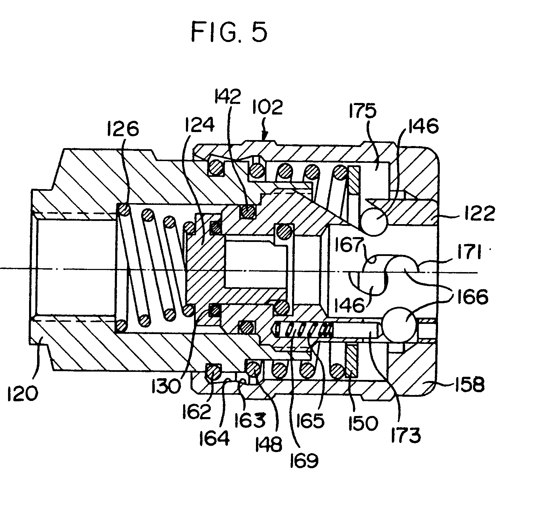

Im zweiten Ausführungsbeispiel nach Fig. 5 ist das federnde Rastorgan 62 des ersten Ausführungsbeispiels durch einen radial federnden Federring 162 ersetzt, der aus einem an einer Stelle eine kleine Lücke aufweisenden Stahldraht mit rundem Querschnitt besteht. Beim Ausüben einer radial nach innen gerichteten Kraft auf den Federring 162, indem eine der beiden entgegengesetzt geneigten Innenflächen 163, 164 durch Verschieben der Hülse 158 über den Federring 162 geschoben wird, kann der Federring 162 radial nach innen federn, indem sich dabei die in der Zeichnung nicht sichtbare Lücke des Federringes entsprechend verengt.

In Fig. 5 sind die dem ersten Ausführungsbeispiel nach den Fig. 1–4 entsprechenden Teile mit einer um den Wert 100 erhöhten Bezugsziffer versehen, und es wird deshalb auf eine Wiederholung der Beschreibung dieser Teile sowie deren Funktion verzichtet.

Bei diesem zweiten Ausführungsbeispiel werden die beiden kugelförmigen Riegelorgane 166 durch eine relativ zum Muffenteil 120 axial wirkende Druckfeder 165 in Richtung zu dem aussenseitigen axialen Ende 171 des Käfigraumes 167 gedrückt, so dass sicher verhindert wird, dass die kugelförmigen Riegelorgane 166 nicht radial nach aussen in den Innenraum 175 der Schiebehülse 158 gelangen können und somit funktionslos werden. Diese Gefahr besteht insbesondere dann, wenn der Muffenteil 120 mit seiner Öffnung nach oben gerichtet gehalten oder montiert wird. Durch die Federbewegung der Druckfeder 169 kann jedoch das kugelförmige Riegelorgan 166 beim Einschieben des Stecknippels 4 und dabei Kontakt mit dessen konischer Fläche 8 schräg nach aussen dem Nippelwulst 10 (Stecknippel gemäss Figur 1) ausweichen, um anschliessend sich in axialer Richtung wieder in die Ausgangslage am aussenseitigen Ende 1971 des Käfigraumes zurückzubewegen. Durch diese Federbelastung des Riegelorgans werden auch Fehlermöglichkeiten aufgrund einer Verschmutzung der Teile vermieden.

Die Druckfeder 165 ist in einer axial verlaufenden Bohrung 169 des Kupplungskörpers 122 zusammen mit einem Zylinderstift 173 angeordnet, der an der Kugeloberfläche des Riegelorganes 166 aussermittig so anliegt, dass sich eine radial nach innen gerichtete Kraftkomponente an dem Riegelorgan 166 ergibt.

## Patentansprüche

1. Rohrleitungskupplung bestehend aus einem Muffenteil (2, 102) und einem in diesen hineinschiebbaren Stecknippel (4), mit einem im Muffenteil angeordneten, beim Entkuppeln selbsttätig schliessenden Ventil (24, 124), wobei der Muffenteil einen hohlzylindrischen Kupplungskörper (22, 122) und eine diesen umschliessende, gegen den Druck einer Feder (48, 148) bewegliche Schiebehülse (58, 158) aufweist, mindestens einem in einem schrägen Kanal (47) des Kupplungskörpers (22, 122) geführten ersten Riegelorgan (46, 146), das in eine durch mindestens eine konische Fläche begrenzte Umfangsnut (12) des Stecknippels einrastet, wobei das erste Riegelorgan von der Feder (48, 148) in Richtung der Verriegelungsposition belastet und durch die Schiebehülse gegen den Druck dieser Feder (48, 148) in eine Entriegelungsposition bewegbar ist, und mindestens einem in dem Kupplungskörper (22, 122) gehaltenen zweiten Riegelorgan (66, 166), das in einer der Entriegelungsposition des ersten Riegelorgans (46, 146) entsprechenden axialen Position (Fig. 4) der Schiebehülse in die Umfangsnut (12) des Stecknippels einrastet und dort durch die Schiebehülse (58, 158) gehalten ist, wobei der Stecknippel (4) in dem Muffenteil (2, 102) zwei axiale Kupplungspositionen hat und das Ventil (24, 124) bei eingerastetem zweiten Riegelorgan (66, 166) geschlossen ist, dadurch gekennzeichnet, dass im Muffenteil (2, 102) ein federndes oder federbelastetes Rastorgan (62, 162) vorgesehen ist, das bei der Verschiebeposition der Schiebehülse (58, 158) in der sich das mindestens eine zweite Riegelorgan (66, 166) in Eingriff mit dem Stecknippel befindet, in diese einrastet, und dass die Feder (48, 148) das erste Riegelorgan (46, 146) direkt und die Schiebehülse (58, 158) über das erste Riegelorgan belastet, so dass das erste Riegelorgan (46, 146) durch den Stecknippel (4) entgegen der Federkraft relativ zu der Schiebehülse beweglich ist.

2. Rohrleitungskupplung nach Anspruch 1, dadurch gekennzeichnet, dass das mindestens eine erste Riegelorgan aus einem Zylinderstift (46, 146) besteht, dessen Enden an der das Riegelorgan belastenden Feder (48, 148) anliegen (Fig. 2).

3. Rohrleitungskupplung nach Anspruch 2, dadurch gekennzeichnet, dass das mindestens eine zweite Riegelorgan in Form einer Kugel (66, 166) vorhanden ist, die in Umfangsrichtung des Kupplungskörpers (22, 122) neben einem Zylinderstift (46, 146) angeordnet ist und sich in einem axial gerichteten länglichen Käfigraum (67, 167) des Kupplungskörpers befindet.

4. Rohrleitungskupplung nach Anspruch 3, gekennzeichnet durch eine konische Steuerfläche (70) an der Innenseite eines Bodenteils (68) der Schiebehülse (58, 158), die sich bei der Schiebebewegung der Schiebehülse über die mindestens eine Kugel (66, 166) hinwegbewegt.

5. Rohrleitungskupplung nach Anspruch 3 oder 4, dadurch gekennzeichnet, dass das mindestens eine kugelförmige zweite Riegelorgan (166) durch eine Druckfeder (165) in Richtung zu dem aussenseitigen axialen Ende des Käfigraumes (167) hin federbelastet ist.

6. Rohrleitungskupplung nach Anspruch 5, dadurch gekennzeichnet, dass sich an den Käfigraum (167) in axialer Richtung des Muffenteils (102) eine Bohrung (169) anschliesst, in der eine Schraubenfeder (165) angeordnet ist, wobei zwischen der Schraubenfeder und dem kugelförmigen Riegelorgan (166) ein axial verschiebbarer Zylinderstift (173) angeordnet ist.

7. Rohrleitunskupplung nach Anspruch 6, dadurch gekennzeichnet, dass der Kontaktpunkt zwischen dem Zylinderstift (173) und dem kugelförmigen Riegelorgan (166) sich in zum Muffenteil (102) radialer Richtung radial ausserhalb des Mittelpunktes des Riegelorgans (166) befindet, so dass durch die Federbelastung an dem Riegelorgan (166) eine radial nach innen gerichtete Kraftkomponente auftritt.

8. Rohrleitungskupplung nach Anspruch 1, dadurch gekennzeichnet, dass das Rastorgan (62, 162) einen Anschlag bildet für die Sicherung der Schiebehülse (58, 158) an dem Muffenteil (2, 102), wobei die Anschlagposition der Schiebehülse (58, 158) vorliegt, wenn sich das mindestens eine federbelastete erste Riegelorgan (46, 146) in einer Verriegelungsposition befindet (Fig. 1).

9. Rohrleitungskupplung nach Anspruch 1, dadurch gekennzeichnet, dass das federnde Rastorgan ein radial federnder Federring (162) ist, der aus einem an einer Stelle eine Lücke aufweisenden Stahldraht mit rundem Querschnitt besteht.

## Claims

1. Pipe coupling comprising a socket part (2, 102) and a plug nipple (4) which can be inserted therein, with a valve (24, 124) positioned in the socket part and which automatically closes on uncoupling, the socket part having a hollow cylindrical coupling member (22, 122) and a sliding sleeve (58, 158) surrounding the same and movable against the tension of a spring (48, 148), at least one first locking member (46, 146) guided in a sloping channel (47) of coupling member (22, 122) and which engages in a circumferential slot (12) of the plug nipple and which is bounded by at least one conical surface, the first locking member being loaded by spring (48, 148) in the direction of the locking position and is movable into an unlocking position counter to the tension of spring (48, 148) by the sliding sleeve, and at least one second locking member (66, 166) held in the coupling member (22, 122) and which engages in the circumferential slot (12) of the plug nipple in an axial position (Fig. 4) of the sliding sleeve corresponding to the unlocking position of the first locking member (46, 146) and is held there by the sliding sleeve (58, 158), the plug nipple (4) having two axial coupling positions in the socket part (2, 102) and when the second locking member (66, 166) is engaged valve (24, 124) is closed, characterized in that the socket part (2, 102) contains a resilient or spring loaded catch member (62, 162) which, in the displacement position of sliding sleeve (58, 158), in which the at least one second locking membr (66, 166) engages with the plug nipple, engages in the latter, and that the spring (48, 148) directly loads the first locking member (46, 146) and loads the sliding sleeve (58, 158) via the second locking member, so that the first locking member (46, 146) is movable through the plug nipple (4), counter to the spring tension, relative to the sliding sleeve.

2. Pipe coupling according to claim 1, characterized in that the at least one first locking member comprises a parallel pin (46, 146), whose ends engage on spring (48, 148) loading the locking member (Fig. 2).

3. Pipe coupling according to claim 2, characterized in that the at least one second locking member is in the form of a ball (66, 166), which is arranged in the circumferential direction of coupling member (22, 122), alongside a parallel pin (46, 146) and is located in an axially directed, oblong cage area (67, 167) of the coupling member.

4. Pipe coupling according to claim 3, characterized by a conical control surface (70) on the inside of a base part (68) of the sliding sleeve (58, 158), which moves over the at least one ball (66, 166) during the displacement movement of the sliding sleeve.

5. Pipe coupling according to claims 3 or 4, characterized in that the at least one spherical second locking member (166) is spring-loaded by a compression spring (165) in the direction towards the outer axial end of the cage area (167).

6. Pipe coupling according to claim 5, characterized in that a bore (169) follows onto a cage area (167) in the axial direction of the socket part (102) and in said bore is arranged a helical spring (165), whereby between the latter and the spherical locking member (166) is provided an axially displaceable parallel pin (173).

7. Pipe coupling according to claim 6, characterized in that the contact point between the parallel pin (173) and the spherical locking member (166) is positioned radially outside the centre of the locking member (166) in a radial direction with respect to the socket part (102), so that there is a radially inwardly directed force component due to the spring loading on the locking member (166).

8. Pipe coupling according to claim 1, characterized in that the catch member (62, 162) forms a stop for securing the sliding sleeve (58, 158) on the socket part (2, 102), the stop position of sliding sleeve (58, 158) existing when at least one spring-loaded, first locking member (46, 146) is in a locking position (Fig. 1).

9. Pipe coupling according to claim 1, characterized in that the resilient catch member is a radially resilient spring washer (162), comprising a steel wire having a circular cross-section and having a gap at one point.

**Revendications**

1. Raccord pour conduites, composé d'un manchon (2, 102) et d'une tubulure mâle (4) pouvant être introduite dans celui-ci, comportant, dans le manchon, une soupape (24, 124) fermant automatiquement au déverrouillage, le manchon comportant un corps de raccord (22, 122) alésé et une douille de poussée (58, 158) entourant le corps de raccord et mobile contre la pression d'un ressort (48, 148); le raccord pour conduites étant composé par ailleurs d'au moins un premier organe de verrouillage (46, 146) guidé dans des fentes obliques (47) du corps de raccord (22, 122), cet organe de verrouillage s'enclenchant dans une rainure périphérique (12) de la tubulure mâle, rainure limitée par au moins une surface conique, cependant que le premier organe de verrouillage est poussé par le ressort (48, 148) dans le sens de la position de verrouillage et qu'il est déplacable par la douille de poussée contre la pression de ce ressort (48, 148) dans une position de déverrouillage; le raccord pour conduites étant composé par ailleurs d'au moins un deuxième organe de verrouillage (66, 166) maintenu dans le corps de raccord (22, 122) qui, dans une position axiale (figure 4) de la douille de poussée correspondant à la position de déverrouillage du premier organe de verrouillage (46, 146), s'enclenche dans la rainure périphérique (12) de la tubulure mâle, où il est maintenu par la douille de poussée (58, 158), cependant que la tubulure mâle (4) a deux positions axiales de raccord dans le manchon (2, 102) et que la soupape (24, 124) est fermée quand le deuxième organe de verrouillage (66, 166) est enclenché, caractérisé en ce qu'il est prévu dans le manchon (2, 102) un organe d'enclenchement (62, 162) élastique ou poussé élastiquement, qui, dans la position de déplacement de la douille de poussée (58, 158), dans laquelle au moins un deuxième organe de verrouillage (66, 166) est en prise avec la tubulure mâle, attaque dans la douille de poussée; et en ce que le ressort (48, 148) charge le premier organe de verrouillage (46, 146) directement et la douille de poussée (58, 158) par l'intermédiaire du premier organe de verrouillage, de sorte que le premier organe de verrouillage (46, 146) est mobile sous l'action de la tubulaire mâle (4), par rapport à la douille de poussée et contre l'action du ressort.

2. Raccord pour conduites suivant la revendication 1, caractérisé en ce qu'au moins un premier organe de verrouillage est constitué par une goupille cylindrique (46, 146), dont les extrémités s'appuient au ressort (48, 148) chargeant l'organe de verrouillage (figure 2).

3. Raccord pour conduites suivant la revendication 2, caractérisé en ce qu'il existe au moins un deuxième organe de verrouillage en forme de bille (66, 166), qui est disposé dans le sens périphérique du corps de raccord (22, 122) à côté d'une goupille cylindrique (46, 146) et se trouve dans une cage longitudinale axiale (67, 167) du corps de raccord.

4. Raccord pour conduites suivant la revendication 3, caractérisé par une surface de commande conique (70) sur la surface intérieure d'un fond (68) de la douille de poussée (58, 158), qui se déplace par dessus au moins une bille (66, 166) au moment de la poussée de la douille de poussée.

5. Raccord pour conduites suivant l'une des revendications 3 ou 4, caractérisé en ce qu'au moins un deuxième organe de verrouillage sphérique (166) est poussée élastiquement par un ressort de pression (165) dans le sens de l'extrémité extérieure axiale de la cage (167).

6. Raccord pour conduites suivant la revendication 5, caractérisé en ce qu'un conduit 169 se raccorde à la cage (167) dans le sens axial du manchon (102), conduit dans lequel se trouve un ressort hélicoïdal (165), une goupille cylindrique (173) mobile axialement étant disposée entre le ressort hélicoïdal et l'organe de verrouillage sphérique (166).

7. Raccord pour conduites suivant la revendication 6, caractérisé en ce que le point de contact entre la goupille cylindrique (173) et l'organe de verrouillage sphérique (166) se trouve dans le sens radial du manchon (102) — radialement à l'extérieur du centre de l'organe de verrouillage (166), de sorte que la charge élastique exercée sur l'organe de verrouillage (166) crée une composante de forces dirigée radialement vers l'intérieur.

8. Raccord pour conduite suivant la revendication 1, caractérisé en ce que l'organe d'enclenchement (62, 162) forme une butée assurant la position de la douille de poussée (58, 158) sur le manchon (2, 102), cette douille étant en position de butée quand au moins un premier organe de verrouillage (46, 146) chargé par ressort est dans une position de verrouillage (figure 1).

9. Raccord pour conduite suivant la revendication 1, caractérisé en ce que l'organe d'enclenchement élastique est une rondelle radialement élastique (162), composée d'un fil d'acier de section transversale ronde, qui présente à un endroit une interruption.

Fig. 1

Fig. 2

Fig. 3

Fig. 4

FIG. 5